# EUROPEAN PATENT APPLICATION

(11) **EP 2 204 763 A1**
(43) Date of publication of application: **07.07.2010**
(21) Application number: 08022312.6
(22) Date of filing: 23.12.2008
(51) Int. Cl.: G06N 99/00

(54) **Learning computer**

(71) Applicant: Schmidt, Wolfgang, Dipl.-Ing., 82211 Herrsching (DE)
(72) Inventor: Schmidt, Wolfgang, Dipl.-Ing., 82211 Herrsching (DE)

(57) **Abstract**

1. Learning computer accepts lesson of subprime crisis: future of credit risk is not predictable. As millions of debtors not paying interest demonstrate falsifying fundamentals in the computer technology. Hierarchy of order and obedience is formalism not able to guaranty freedom of contradiction in computer program causing countless defaults and blackouts in computers.
2. Birth of computer achieved Alan Turing 1936 "if reason is obedience to rules of logics then machines can think". Formalized reason fails in financial crisis and Iraq illustrating: future is unpredictable, reality is uncontrollable by power. Learning computers do not order reality how it has to be but anticipates autarkic reality by simulation: learning by virtualizing world complexity.
3. Learning computer turns from obedience to competition which produces transparency of contents by contradictions of hypotheses striving for acceptance as truth by the community. Competition is random generator maximizing variation in hypotheses making selection efficient.
4. Computers were machines executing the will of constructor and programmer but learning computers are systems producing best possible information. Which language alone can not produce - since coding of 26 letters with generative grammar achieves boundless creativity of ideas but can not tell what is reality. Innovation is computer consisting of subsystems for word, picture, money, tactile contact to produce feedbacks of reality. In subprime crisis money taught words claiming able to predict the future are wrong. The renewal are selfcontrolling computers.
5. Innovation is not homogeneity but diversity makes chips community efficient. By simulating complexity of world reality in preparing decision with information not taken as absolute eternal truth but evaluation of situations. Information is relative to time and space as Einstein found,
6. Differences are not eternal friend/ennemy-divisions but "schema to produces information", Immanuel Kant "Critics of Reason", and "truth is hypothesis that proves in reality", Karl Popper,
7. Information is divided of human since telegraph to Global Village. The learning computers radicalize information systems without persons - abstract communication of pure information.

## Description

| | |
|---|---|
| a. Technical field of invention | 1 |
| b. Actual state of computer technology as background | 1 |
| c. Description of the invention | 8 |
| d. Claims for learning computer | 15 |
| e. Abstract | 16 |
| f. Drawing | 17 |

### a. Technical field of invention

The invention concerns construction and organization of computer. After Alan Turing invented computer "if reason is obedience to rules of logic then machines can think" 1936 the computer experienced series of triumphs. Subprime crisis revealed in failing computerized predictions of future credit risks, failing elimination of risk by superimposing 10-years-risk-curves since 2007 that countless computer blackouts are more then small defects - disclose need for revision of fundamental assumptions in traditional computer technology leading to presented invention.

### b. Actual state of computer technologies as background art

b1. Computers lack operation reliability and compatibility with social realities
b2. Computers mechanize mathematics: obeying rules and excluding contents
b3. Hierarchy of orders in computer ignores accident: does not avoid contradictions
b4. Information theory of computer technology quantifies by excluding significance
b5. Computer blackouts are lack of learning: without feedbacks of success in reality
b6. Reality is not objectively observable but a construction of the learning reason
b7. Processing only words, as information media, limits computers performances

### b1. Computers lack operation reliability and compatibilty with social realities

Actual state of computer technologies is shown by a Microsoft expertise for Windows XP and Office: "Do we have soon the perfect computer without problems? Will there be a day with computers functioning without trouble? It seems impossible to produce hardware and software without error", Elmar Török, Financial Times Deutschland 15/3/2007/30. Microsoft sees complexity of computers as causation for incorrect conduct, malfunctions and blackouts. Not only millions of users of private computers are nerved even corporations as Telekom suffer from series of blackouts in workstations of callcenters. Telekomboss Obermann "we know that our computersystems are full of failings". Thomas In der Rieden, University Saarbrücken, leads the project Verisoft shown at Cebit 2007 in which the Ministry of Research Berlin wants to get formal prove that computersystems are without hidden defect. Rieden: "There are so many different components to harmonize in computer that even statistically freedom of defects is an illusion. Correctness of computer operation is not clearly to define, requirement specifications are formulated in natural language and translations into processing of computer is not without failures." Verisoft failed until now. Not because "The universe of requirement specifications is too big to commit all component suppliers to needed tests", Rieden. Holger Giese in University Paderborn: "Digital connections are assigned only for a specific funktion not for selfadjustment and autocorrections", a hint that the problem lies deeper and where: in implicit assumptions of computer technology and in its information theory that are to be disclosed and to be adjusted.

Achim Bachem, general manager Jülich Research Center, critizises german backwardness in supercomputing: "Years ago 15% of 500 world fastest computers were in this country, today only 4%, China outclassed Germany. For better doing Germany must organize cooperation of supercomputing in Jülich, Stuttgart, Garching near Munich - because without supercomputing as the fundamental technology a country loses its competitiveness", Spiegel 16/4/2007/156. Bachem sees the problem of computer technology in its backwardness behind USA Bluegene computer 8-times faster, quantitative instead qualitative thinking that Schröder, Ver-di, pins down for Telekom "the problem is repairing by improvising not deliberately thinking functional, therefore we have now a chaos in our callcenters after 17 reorganizations in only 10 years".

Complexity in computer is the problem according to Microsoft still in the hope that technical progress is helping. Technical sophistication as Bachems supercomputing is not solution but origine of difficulties as discloses the financial crisis - the pretention of computers to be able predicting the future. The subprime crisis began with computing the risk of credit for ten years into the future and with the claim to eliminate the risk by superimposing 10-years-risk-curves. Computer technology made the mistake to project own machine-logic into reality of the world. Reality now demonstrates that this an error with 4 mio cashlosses, 1,400 bio $ amortizations IMF, bankrupcies of creditors, Citigroup, Merril Lynch, UBS, Bear Stearns... replacing CEO.

### b2. Computers mechanize mathematics: obeying rules and excluding contents

Computer technoloy is principally still like "Turing-Machine" 1936, invented by Alan Turing with the fundamental principle "if reason is obeying rules of logic then machines can think". Platon and Aristoteles understood reason as insight in the world order but Boethius, Lullus, Leibniz, Euler, Frege, Boole, Shannon... formalized reason to logic by simply obeying rules in mathematics claiming truth of axiom and deduction in freedom of contradiction in traditional computers. Boolean algebra in binary mathematics based Claude Shannons "Mathematical theory of communication" 1948 defining bits as elementary particles which by linear addition produce information. Computer technology since then follows theory of sets - quantification of information by excluding contents and meanings - is the first causation of computer failings . What seems logic in western history of ideas as development of mathematics from Aristoteles, Kepler, Galilei, Newton, Turing, Neumann.. to the invention of computer - is due to a specific physical and technical culture that envisions the world as composed of bodies that move in an empty space driven by forces between them. The origine is Aristoteles "change is movement". Kepler formulated laws for movement of planets around the sun. Galilei tested at Pisas tower if Keplers laws allow calculate trajectories of cannonballs. Newtons Philosophiae mathematica universalis gives three basical equations of mathematics, defining a dozen axioms as condition for the validity of mathematics in computer technology: absoluteness, homogenity, continuity... Computer technology has an implicit gap of reality and mathematical assumptions. Newtons conditions are taken as statement about reality. Mathematicians as community renounced the claim of truth for axioms in Grundlagenkrise der Mathematik 1900-1933 led by David Hilbert, Kurt Gödel... After Unvollständigkeitssatz 1931 also freedom of contradiction in mathematic as deduction is renounced. Todays financial crisis prooves the correctnes of Hilbert, Gödel... Mathematics in computer technology are built on obsolete fundamental assumptions, needing to be replaced by new construction principles upgrading computer from a quantifying machine, that only finds keywords and headlines - to a semantic information system that gives answers.

### b3. Hierarchy of orders in computer ignores accident: does not avoid contradictions

"There are so many components to harmonize in computers that even statistically the freedom of defect is an illusion", Rieden, implicitely also identifies the second causation of computer faults: hierarchy of orders by constructors and programmers with obedience of chips can not guaranty the computers freedom of internal contradictions that blockade the further operation.

Berlins Ministry of Research looking for formal prove of faultlessness with Verisoft forgot Kurt Gödel, David Hilbert and the result of the Grundlagenkrise der Mathematik: the formalization in hierarchy of order and obedience can not eliminate contradictions because neglecting content. Andreas Zeller, University Saarbrücken, looks at errors statistically: if having characteristics in common. Even from biografies of working process and social behavior of its persons he tries to predict failures. Stephan Diehl, University Trier: "works biografically to find the Achilles heel in the blind flight of constructing and programming". Zeller and Diehl assume the predictability of errors similar to forecasting the future risk in credits. Günther Limbök, SAP, "the statistical methode did not help in forcasting fault-prone products", Financial Times Deutschland 29/10/2007/33, hits indirectly the problem - the lack of concistent logic in construction and program: it would need only one search-run to find failures if computer technology had a consistant logic.

Dieter Rombach, Fraunhofer Grundlagenforschung Computer Engineering 2007: "We are just finding out a lot of what makes codes fault-prone.. Constructors and programmers need rules like engineers in constructing machines in physics" reveales that even in the Fraunhofer basic research the computer is still thought as information machine obeying hierarchy of natural law, ignoring the fact that first relativity theory falsified the axiom absoluteness and then quantum theory falsified the axiom homogenity and continuity. Electrons demonstrate the omnipresence of accidents in reality not moving as bodies continuously on trajectories but being energy that exists only for moments. Neither subatomic or cosmic world nor social communities follow the mechanical equations in computer technolgy: computers must be sematic information systems.

### b4. Informationtheory of computer technology quantifies by excluding significance

IT-summit of Kanzlerin Merkel with Siemens, SAP... in Hannover 10/12/2007 is dedicated to the backwardness of german IT-industry behind USA and Far East requesting innovation "from Suchmaschine zu Antwortmaschine - semantic computer" as new computer technology, not only finding keywords and headlines but giving answers to questions - and economic growth. Not discussed in the meeting was what exactly has be be improved. Since Claude Shannon Mathematical theory of information 1948 "bits are defined elementary particles of information", unchanged by transport, equality of information in sender and receiver: the third causation of computers failing and being simple searchmachine. Not equality but difference of information in sender and receiver is the reality observable every day. The translation from sender brain to language and receiver brain means double change of media from electron energy in the brain to mechanical energy of sound and again to electron energy. Not equality but difference of the information in sender and receiver is social reality as basis for sematic computer technology. Pedagogic theory "learning is input and correct output of information" contributed to a false additive information theory of composing information in writing and reading with letters as particles. Computer technology uses a mechanical quantifying information theory of machines that handles words as amounts of bits excluding meaning of words "more information is better information". Evolution teaches that not addition but selection is the methode of information. Darwin discovered evolution as variation and selection of organisms but overlooked internal evolution of information to direct the organism. Semantic computer technology has to learn the lession of information evolution "differences that make differences are information". Energy systems produce individual information relative to systems as Einsteins discovered for space 1 and time as information relative to galaxies and other energysystems. Information evolution shows systems using differences of energy as signals coding from an abundance of signals in environment to a limited number of signs that systems can handle. Information is produced by (a) assigning hypothetical significance to signs formed of differences and (b) by feeding back from reality if significance is successful explaning the world or not - if it is verified or falsified.

### b5. Computer blackouts are lack of learning: without feedback of success in reality

No learning facility in computer is consequence of information excluding significance. Neglect of each word having until a dozen significations is the cause for unexpected contradictions in operation business. Quantification was so to speak a trick of information theory to get rid of the problems with different meanings, a trick similar to the exclusion of accidents in mathematics. In order to manage contradictions the new generation of computers is to be constructed as information systems that clarify what information means by learning as selection of meaning. Computers learning disability is the forth causation of operational failures and blackouts. The computer have no facilities for learning and repairing contradictions in operations. Computer are constructed as if being unfailing - inefficient in variable world full of accidents and risks as 3 financial crisis shows. It began with forecasting 10-years-credit-risk and elimination of risk by superposing 10-years-risk-curves. Actual computer technology constructs and programs as if world reality must follow the theory of assumptions and construction principles for computers. Which is result of axiomatic and deduction with no provision for selfcontrol by feeding back reality. Not being able to learn is the deficiency of computers because designed as machines. Computers get the ability to learn by advancing from machine to system. Machines move but do not change being independent of the environment, only obeying orders of constructor and programmer. Systems change itself adapting to the environment and can do it by learning. Stability for a machine means changelessness - for a system stability means adaptability. In a world of permanent changes the traditional computer technologies must be inefficient because of faults in basic assumptions the world be predetermined and predictable, practised with David Li Formula computer forcasting risk of credits for 10 years in advance claiming able to eliminate risk by superimposing several curves of risk in securitization financial instruments, certified with AAA by the rating institutes. Computer technology pretends a controllable world instead of using the huge calculation capacities for learning how markets behave by simulating interdepemdencies and interactivities with the feeding back of verifying these virtualizations.

### b6. Reality is not objectively observable but a construction of the learning reason

National Cancer Institute NCI in USA reports of 43 hospitals in New Hamshire, Colorado and Washington, 220.000 patients 1998-2002, that in 1 of 6 diagnosis computer did not realize the prestage of cancer. NCI-director Niederhuber "computeraided diagnostic worsened results". The NCI-study points to a decisive deficiency in computer technology not yet disclosed. The fotograf-sensors of computers give only flat observations of dark intensities on white ground, no threedimensional pictures as the brain of doctors. Therefore computers can not detect what doctors are able to diagnose. The reason is "Abbildtheorie", fotos supposing to be copies of an objectively observable reality - an illusion in the basic assumptions of computer technologies. Sensor technique in computers does not yet realize that only the retina in the eyes operates according to "Abbildtheory" mapping light reflexions twodimensionally. But pictures we see in the visual brain are produced out of two retinas with special importance to the differences of the two retinas. The differences in space and time between the eyes, as small as they are, enable the visual brain to construct the threedimensional world that we see in our daily life. "Abbildtheorie" neglects also that the world we see consists only to 0 20% of actual data of retinas - 0 80% data of the picture seen are from the memory "we see only what we know". Ancient egyptian painters presented content of a box even when closed, painting what they knew. Computer technology with Abbildtheorie has deficits in realism - what we know is not objective knowledge but our own construction. "I am in a world that is within me", Paul Valéry. The hidden constructivity of the world we observe is the fifth causation of the deficiencies in computer technology. Because it is not enough to fotograf what is supposed to be the reality. Sensor technique in computer, NCI survey demonstrates, is to construct with (a) a memory able to integrate actual and recalled data in interactive processing, (b) to integrate data from several media of observation. Evolution of information is lecturing that (c) tactile contacts especially in finger tips developed in cooperation with threedimensional seeing and (d) that both are media for feeding back reality: advancing assertions from hypothesis to trueness.

### b7. Processing only words, as media of information, limits computers performances

National Cancer Institutes reports that 1998-20021 of 6 computer diagnosis do not realize the prestage of cancer, NCI-directors "computer-aided diagnostic worsened results", delivers also the sixth causation for inefficiency in computer technology because of computers processing only language as media - distorting with verbal classificaton what in reality follows other rules. Fotos of computer sensors are taken and processed isolated from other media missing their contributions. Doctors eyes distinguish differences of photon energy, about 16 per second, each snatch lasts 0,2- 2,0 seconds, as signals that are coded into signs of electron energy transferred to the visual brain where the pictures are composed and evaluated in cooperation with experiences that other media delivered by memory. A difference that makes a difference. To enable equal performances in diagnostic as doctors furnish the computer technology has to learn from evolution of information: has to progress from machines processing only words as orders in obedience - to informations systems with the autarky the learn by feedback of reality. Linearity of computer as machine processing as addition of bits with unquestioned significance as content has to be replaced by interactivity in space and time, that is cooperation as parallel processing with different media side by side and the forth and back of learning procedures. Acual computer technology is strongly hindered by using on/out-differences of electron energy as signals in information theory of bits as elementary particles of information - instead of using "bit is difference effecting a difference" as elementary event of information - as new definition.

### d. Description of the invention

Technical problems of computers which are to be solved by the invention of learning computer:
(1) most computer blackouts are blockades by internal contradiction since programs formalized by order and obedience are not able to guaranty equality of information in sender and receiver,
(2) subprime crisis shows failure of computer predicting credit risk by deterministic projection of the past into the future, (3) computers are capable only to what constructors and programmers designed: helplessness in a world of change, (4) until now computer technology designed only searching machines producing keywords and links - without the capability to answer questions, (5) computer is unable to evaluate reliability of information as the key problem of information.
   d.1 How learning computer is organized as system with subsystems of autarkic chips 8
   d.2 How subsystems process information by communication in community of chips 9
   d.3 How chips are designed to learn by interacting of memory and communication 11
   d.4 Some underlying principles for construction and program of learning computers 13

### d.1 How learning computer is organized as system with subsystems of autarkic chips

Outside learning computer is hardly to distinguish of traditional computer since input processor with keyboard and distribution of signals and output processor with display screen are equal. The difference is inside not one but four central processing units differentiated by media, word, picture, money and tactile contact. All subsystems are interacting with other subsystems and each subsystem has autonomous connection with the input processor and output processor. Purpose of four media-differentiated subsystems is to produce reliability of information by feedbacks with other media to find out reality: "truth is hypothesis that proves", Karl Popper.

Language has deficiency that coding of 26 letters with generative grammar can produce a boundless creativity of ideas - but can not tell what is reality. Therefore learning computer is constructed as interaction of different information media. That "we can not walk through a wall" is known to language by tactile contact of the body. Having made the experience we need no more bodycheck but vision as information media provides necessary reality feedback. Money is information media necessary in complex society to feedback reality of strategy, plan, idea..

### d.2 How subsystems process information by communication in community of chips

Subsystem is community of chips connected all with all in horizontal organization of vertically designed chips. All chips are in equal level, beneath or above is the bus level from all to all, the more chips the higher the bus layer. Each bus is bilateral for reciprocal communication. All chips connected with all in subsystem enables reciprocal interaction of all chips making all equivalent. Learning computers process information in perfect markets not hierarchy of order and obedience in old computer. Not obedience to ordered truth but competition of hypotheses for acceptance as truth is construction principle. Chips are programmed for to use bits not as particles of truth in traditional computer but as on/out-differences of electron energy - what they really are: as alternative decisions. Learning computers enhance information technology by fundamental innovation of the device "differences that effect differences are informations". Subsystem is communication system of difference as information media. On/out-difference is basic event as elementary form to produce alternative decisions yes/no, either/or, right/wrong, healthy/sick, innocent/guilty... to evaluate the situations as information for behavior or action. Innovation is to separate media equal for all from meaning of information which is individual.

Bits as on/out-differences of electron energy are information media allow communication within subsystem equal for all chips combined with individuality of chips making up their own mind by deciding within the context of own memory. Chips are programmed not for obedience but for competition as random generator to variation in deversifcation of individual memories. Equal for all is interaction procedure of communication and memory - content is made by learning. Bits not particles added to words but on/out-difference as elementary event form alternative decision is innovation that allows standardized processing in all subsystems of which words, pictures, money and tactile contacts are different products. Like in nature where tactile feeling is produced by electron movement of contacting surfaces. Words are produced by sounds as energy differences in the air. Vision is distingishing energy differences 200-800 nm of photon energy of light coded to electron energy in eye and brain. Computer technoloy by the learning computer enhances to simulate reality - virtualization as methode to understand the world.

Subsystems produce artificial intelligence by new processing of information as learning. Since in subprime crisis predicting future of credit risks by projecting past into future failed: the new methode is simulation of reality and controlling hypotheses by reality feedback. Subsystems are not programmed to invaried output of unquestioned input - but to question hypotheses in competition for prove. A fundamental reversal: not reason of constructors and programmers determines decisions of organizations of chips but subsystems as community of autonomous chips produce common decisions to which we ascribe as quality that they are made by reason. Artificial intelligence is achieved in subsystems "by full information". Meaning is that reason can be broken down to criterias which can be made operational. In short, the qualification of decisions as reason is transparency of preconditions and consequence of decisions by open discussion in subsystems as free opinion market with competition maximizing the variability of hypotheses. The more chips compete the more efficient is simulation of reality by hypotheses. Reason is not participation of human in omniscience of God implicitly assumed by computer technology but reduction of world complexity by learning computer coding abundant signals not processible to limited number of signs which are processible as forms composed of on/out-differences. To the forms are assigned meanings as hypotheses interpreting the world reality. Processing forms of on/out electron energy is new technique to assign hypothetical meanings which by feedbacks of reality are qualified as reliable information to direct human decisions.

Learning computer by subsystems as community of chips with different communication media realizes a methode enabling us to outwit reality in order to tell us how the reality is changing. Old computers implicitly assumed non-changing world falsified in subprime crisis, the learning computer therefore developed technology to cope with a world in permanent changments. The technique internalizes what happens outside in the world into computer systems - competition as random generator maximizing variation of hypotheses and optimizing the effect of selection. Subsystems function as bourse, direct democracy or brain without director: one chip transports inputs from input processor or other subsystems to all chips and receives all responses acting as bourse numbering votings in his memory. Memory of accounter chip is not individual but registration of subsystem available to all chips for revising feedback of their individual memory. The accounter chip sends the output of the own subsystem to other subsystems with different information media to provide the multimedia feeding back of reality by the learning computer.

### d.3 How chips are designed to learn by interaction of memory and communication

Progress of chip development - great increase in memory capacity, miniaturization in seize and strongly reduced prices - favors innovation of learning computer. With equal elements as before but new organization and program in learning computer chips have not a fixed memory storing orders of programmer but are programmed for interaction of the memory and reciprocal communication with other chips: innovative step of machine to system as progress to learning. CPU processes interaction of memory and communication as dialog among equivalent chips. Procedure is (a) to receive incoming informations composed of on/out-differences of electron energy as elementary event for alternative decisions. (b) to file input into the memory which by existing informations gives meaning to the input as question asking for answer or more general as challenge provoking response. (c) The CPU produces answers to questions or assertions of other chips as language evolution developed: right/wrong, yes/no, healthy/sick. innocent/guilty.. no definite evaluation for ever but situational since situations might change, (d) the output is sent to other chips which react the same way producing communication within the subsystem.

To produce information a schema is needed explained Immanuel Kant in "Critics of Reason", Chips in learning computer use communicated differences of alternative decisions as schema, innovation is distiguishing media and meaning in information neglected by traditional computer technology to differentiate what is communicated from what is processed in memory of chips.

Prerequisite for efficiency of information systems is to realize only the media is equal for all but meaning of information is individual and situational. Whereas chips in traditional computer are sender and receiver with equal information as parts of a machine - chips in learning computer are autonomous system and element of subsystem which is environment for the chip system. As systems the chips make up their own mind in communication within the subsystem. As elements chips adapt to subsystem as environment striving for social acceptance. Pascal was seldom exception to realize "truth is not in one side but is the unity of differences" explaining the paradox of reality to which learning computer adapt in order to simulate and anticipate it.

Chips are disciplined elements of subsystems without being forced by order and obedience since constructed and programmed according systems evolution in nature where systems survive by producing information about environment without reason just by reality feedback. "Differences effecting differences are information" is device of learning computer, not fictitious homogenity by formalism of order and obedience - but information as transparency of decision by competition of chips for acceptance of own hypotheses: learning by feeding back of reality. Input of chips stands not only for communication with outher chips but via accounter chip is information of other subsystems or input of user. In all chips central processing unit CPU is equal except the accounter chip which transfers questions and feedbacks to the subsystem and answers to other subsystems or user specially in case of education computers or sensoric in case of diagnostic computers. The feedbacks of reality run on output and input processor.

Chips in the subsystem pictures demonstrate the information potential of learning computer. The chips of substem picture produces not flat foto like camera or retina of eye but like visual brain by differences of different fotos and data from memory threedimensional pictures. The reason is that on/out-differences of electron energy delivered by sensoric coded from photon energy can be processed - in contrast to old computer technology of bits as particles of words. Learning by on/out-energy as information media is superior to simplifying verbal categories. Chips in subsystem money provide principal information media for reality feedback in society. Language by coding of 26 sounds or letters with generative grammar produces boundless creativity of ideas but can not tell what is the reality - needing reality feedback by other media. Feedback ability of money is due to prices as income/cost-differences and profit/loss-balance easy to process by bits as on/out-differences of electron energy reporting if strategies, plans or products succeed or fail starting as hypotheses to be proved or falsified as reliable information. Chips in subsystem tactile contact complete the three abstract information media word, picture, money by ability to simulate how information evolution started: learning by hand or body still actual in reality as power information. Or computer capacity is needed to evaluate sensor data. Learning in evolution started with body contacting environment. Information was invented to minimize the risk by using small amounts of energy as information media scanning environs. Purpose of producing information is to find and acquire food as energy import to perform work with surplus in energy balance of systems with environment. Atoms are the more frequent the more stable they are saving maximal energy compared to unbound proton, neutron, electron. Evolution is directed by energy economics passing into what we call information economics.

Learning computer combines chips in four specialized subsystems: capable to simulate reality almost perfectly defining reason not as omniscience but learning. Key to artificial intelligence is (a) reduction of world complexity by coding abundant signals the computer can not operate into a limited number of signs as media which are processible and (b) assigning hypothetical meaning as content to the medial forms which (c) is discussed by clearing preconditions and consequences in different perspectives (d) controlled by feeding back success/failure in reality.

### d.4 Underlying principles for construction and programming of learning computer

Learning computer realizes a more basic concept of reason then obedience to rules of logic which was the birth of computer 1936 by Alan Turing "if reason is obedience to rules of logic then machines can think". Credit risk or decision problems are not solved by deterministic prediction as projection of past into the future. Mathematics of natural laws ignores random and computer technology ignores meaning quantifying information as addition of bits taken as particles of unquestioned truth and following mechanical rules of mathematical logics.

Ignoring random and meaning causes most deficiencies in traditional computersblockaded internally by contradiction of same words having different meanings. Computer technology ignored (a) by rules formalized processings can not guaranty the freedom of contradiction and (b) authority by order and obedience can not guaranty truth which is to decide by reality itself. Learning computer therefore takes another approach then traditional computer technology: we internalize rules outside computer system within world reality into internal processing of computer system. Learning computer is no machine determined of constructor or programmer but system composed of elements as systems with elements as systems. The system concept means reciprocal interactions instead of unilateral order and obedience. Purpose is to integrate random and meaning excluded by traditional computer into processing of learning computer. The key to integrate random and meaning into computer processing is to provide competition. Subsystems are without hierarchy or director - are the perfect market by freedom of equivalent chips. Artifical intelligence enjoys a privilege compared to socio-economic reality which is used by learning computer - full competition as random generator perfects variation of hypotheses.

The more chips compete in subsystem (a) the more they are able to simulate possible random in reality anticipating most probable future, (b) the more transparency they produce to make evident preconditions and consequences and (c) the more efficient is selection of decisions. Underlying innovation: information is not absolute and definite determined by eternal truth and logical deduction but is individual evaluation of situation in change needing feedback to control reliability of the information. Information is evaluation as individual decision. Compatibility with communication requires as solution: the media of information is equal for all but the meaning of information is individual. New realism is achieved taken as innovation into learning computers.

Qualification of information is achieved by learning reason controlling itself in reality feedback. Innovation is relativity of information no more produced by ceteris paribus, other things remain equal, but concentrating on interrelations which decide on importance of single information and provide the transparency of society and world needed for private and professional orientations. Subprime crisis emerged by traditional computer quantifying information in hierachies of order and obedience of rigid programs without ability to learn by reality feedbacks and is challenge to which a response is innovation of computer technology: the reversal to learning computer.

By present invention computer technology proceeds from Alan Turing "if reason is obedience to rules of logic then machines can think" quantifying truths as amounts of bits - to Immanuel Kant "information about the world is always produced with a schema" and Karl Popper "truth is hypothesis that proves", we ad "as long as hypothesis proves as truth": the learning computer.

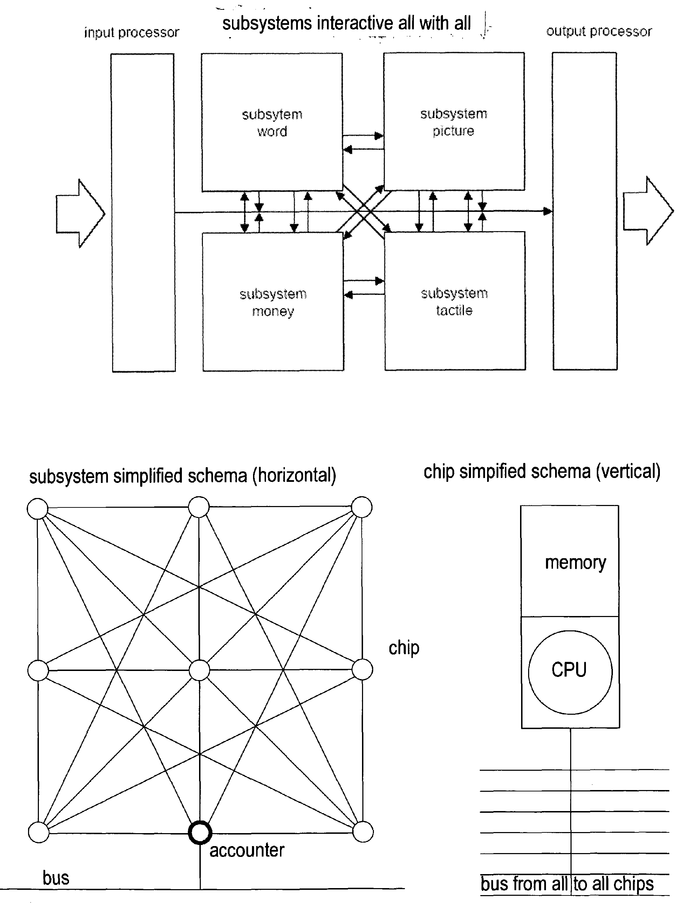

## Claims

**1.** Bit is no more particle of unquestioned truths and not processed by addition but taken as what it really is: on/out-difference of electron energy as elementary event to compose differences: alternative decision as schema to produce information by competition of hypotheses for truth in community of equivalent chips - in subsystems of learning computer.

**2.** Subsystems constructed horizonally by bus connections of all to all chips for reciprocal communications instead of traditional unilateral topdown hierarchies of orders and obedience.

**3.** Separate horizontal level for chips and for bus connections above or below in special layers, the more chips are to be connected the higher is needed space for bus connections.

**4.** Chips constructed vertically with the central processing unit CPU between memory and bus connection, thereby giving adjustable space for different capacity facilities of the memory.

**5.** Subsystem a closed community of chips communication. Registration of results and communivation to other subsystems or user by accounter chips as entry/exit of subsystem.

**6.** Reciprocal bus connections of all with all subsystems. Purpose is to heal deficiency of language which codes of 26 letters by generative grammar into boundless creativity of ideas but can not tell what is reality. Subsystem word interacts with subsystems picture, money and tactile contacts to prove or not communicated hypotheses as truth by feeding back of reality.

**7.** Equal processing in all subsystems by on/out-differences of electron energy as media enables interactions without distorting translations between word, picture, money and contact.

**8.** Assumption of information equalilty in sender and receiver replaced by difference since formalization of order and obedience can not guaranty freedom of contradiction in computers.

**9.** Instead of Newton mathematics of moving particles: plus/minus-account of alternatives, hypotheses.. producing surplus value of informations as innovative economics of reason.

**10.** Learning ability by (a) interaction of autarkic chip memory with chip communication, (b) information media equal for all but meaning of information individual relative to chip, (c) communication of alternatives decisions provokes differentiation of answers simulating reality.

**11.** Variation and selection of differences effecting differences is information producing learning by transparency of virtual anticipating decisions in communication of equivalent chips.

**12.** Chips competition is random generator in variation of hypotheses maximizing selection efficiency of learning by complexity reduction of world reality for processing in the computer.
